# EUROPEAN PATENT SPECIFICATION

(11) **EP 2 228 176 B1**
(45) Date of publication and mention of the grant of the patent: **13.07.2011**
(21) Application number: 09178610.3
(22) Date of filing: 10.12.2009
(51) Int. Cl.: B25B 13/48, B60B 3/16, F16B 23/00, F16B 37/14, F16B 41/00

(54) **Antitheft locking device and method for its production**
Diebstahlsicherungsverschlusssystem und Verfahren zu dessen Herstellung
Dispositif de verrouillage antivol et son procédé de production

(30) Priority: 11.03.2009 IT TO20090178
(43) Date of publication of application: 15.09.2010
(73) Proprietor: Groppo, Lazzaro, 12040 Sanfre' (CN) (IT); Groppo, Matteo, 12040 Sanfre (CN) (IT)
(72) Inventor: Groppo, Lazzaro, 12040 Sanfre' (CN) (IT); Groppo, Matteo, 12040 Sanfre (CN) (IT)
(74) Representative: Robba, Pierpaolo

(56) References cited:
- FR-A- 2 587 422
- US-B1- 7 445 414

## Description

### Technical field

The present invention relates to an antitheft locking device, in particular for fixing a wheel to the hub of a motor vehicle, and a method for its production.

More specifically, the invention relates to an antitheft locking device, made as a threaded bolt or nut, for fixing a wheel to the hub of a motor vehicle.

Antitheft locking devices are known, which are made as threaded nuts or bolts provided with a bushing rotatable in an idle manner preventing their rotation by means of ordinary tools, such as fixed or adjustable keys. In order to screw or unscrew said nuts or bolts it is therefore necessary to use a specific antitheft key which engages the nut or bolt head and which has a shape suitable for being engaged and rotated by means of a conventional tool, precisely such as a fixed or adjustable key.

### Prior art

IT 1.279.160 and US 3.241.408 show exemplary antitheft devices of the above mentioned kind.

According to the prior art, the coupling between the complementary antitheft key and the nut or bolt head takes place by coupling a shaped projection provided on the key head to a corresponding complementary seat provided in the antitheft nut or bolt head. As an alternative, the projection can be provided in the nut or bolt head and the complementary seat can be obtained in the key.

Further according to the prior art, the seat can be formed, for example, as a continue or interrupted variously shaped groove, or as a plurality of irregularly arranged holes.

Still according to the prior art, in order to prevent the nut or bolt to be rotated without using the complementary antitheft key, a bushing is provided, which is fitted on the nut or bolt head and can rotate in an idle manner with respect to said head. In order to hold the bushing on the antitheft device body, a so-called "seeger" circlip made of steel is generally provided, which is accommodated in a corresponding annular seat provided in the antitheft device head. An example of such arrangement is illustrated in IT 1.279.160.

Due to the bushing which is mounted able to rotate in an idle manner, namely freely rotatable around the nut or bolt body, it is impossible to grip and unscrew the nut or bolt from the outside by means of a traditional tool, such as a clamp or the like.

In the past antitheft devices of the above kind have been developed, which are provided with several features aiming to increase their safety and able to resist to common burglary attempts.

Obviously, if the nut or bolt head could be rotated without using the complementary key, the antitheft function of the device would be compromised.

In the known devices, such situation could occur if the bushing could be forcedly removed, for instance by inserting the bit of a chisel, or similar tool, at the bushing base and by violently hitting the chisel using a hammer or the like. In such situation the circlip, which holds the bushing against the antitheft device body, could not be able to withstand the applied force and would break and let the bushing be free to axially come out from the device, leaving exposed the head thereof. Lacking the bushing able to rotate in an idle manner, the device would be easily rotated since it could be gripped by means of a clamp or the like.

As it has been proven in the everyday life, the known devices do not completely prevent such burglary occurrence.

At the present time, it is therefore felt the need of providing antitheft devices of the above mentioned kind, able to withstand burglary attempts which are becoming more and more severe and, in particular, which can make the bushing come out from its seat.

Generic US 7,445,414 B1 discloses a series of high security fastener constructions provided with rotatable anti-theft shrouds mounted on locking wheel nuts and wheel bolts designed for vehicular wheels. These constructions include the following features: a fastener body having a first body end adapted to accommodate a key receiving pattern or member, a second body end having thread pattern extending therefrom, and a shroud receiving portion located between the first and second body ends; a shroud concentrically mounted on the shroud receiving; and a shroud retaining system for retaining the shroud for rotation relative to the fastener body such that the shroud will rotate under an applied torque prior to the fastener rotating when it is installed at a design installation torque. Exemplary shroud retaining systems according to US 7,445,414 B1 further include the following features: designs in which the shroud is retained by interference engagement of its inner side with the fastener body; designs in which the shroud is retained by staking or swaging to the fastener body; and designs in which the shroud is retained by first and second retaining members that are mounted on the fastener body in facing relationship with first and second annular faces of the shroud. The shroud can be substantially tubular, or it can be thickened at one end to provide a security enhancement feature.

A first object of the invention is thus to provide a antitheft locking device, in particular for fixing a wheel to the hub of a motor vehicle, able to withstand these burglary attempts which are very severe.

Another object of the invention is to provide an antitheft device of the above mentioned kind, which can be made in form of both a bolt or nut.

A drawback occurring during the manufacturing of antitheft devices of the above mentioned kind, which incorporate a bushing able to rotate in a idle manner and held by a retaining ring, results from the difficulty to mount the bushing, since the ring has to be very resistant in order to prevent the removal of the bushing when the latter is fitted on the device head. In this mounting step, it is not rare for the bushing, the ring or the device head to be damaged by a too much forceful action.

A further object of the invention is thus to provide a method for manufacturing antitheft locking devices of the above mentioned kind, which can be carried out in an easier and more cost-saving manner than the prior art devices, and which reduces the risk to damage the bushing surface or other parts of the device.

Last but not least object of the invention is to provide an antitheft device of the above mentioned kind, which can be obtained by means of cheap adjustments performed in the existing production plants and processes.

### Description of the invention

These and other objects are achieved by an antitheft locking device as claimed in the enclosed claims.

Advantageously, according to the invention, the bushing removal is permanently prevented due to the threaded portion which extends on the antitheft device body head. The huge axial extent of this portion, with respect to the thickness of a retaining ring according to the prior art, makes difficult and practically impossible to axially withdraw the bushing.

In a further advantageous manner, always according to the invention, since the bushing is mounted on the antitheft device body head by a simple rotation and screwing, the manufacturing of the device results very easy and quick.

The above mentioned advantages further determine a reduction of the rejected manufactured pieces and therefore a reduction of production costs.

In an equally advantageous manner, the antitheft device according to the invention can be obtained by intervening in an easy and economical manner on the conventional processing steps.

### Brief description of the drawings

Some embodiments of the invention will be described as a non-limiting example, with reference to the appended drawings wherein the elements denoted by a same numerical reference are components having the same or a similar function and construction, and wherein:
- Figure 1A is a partially sectioned lateral view of an antitheft bolt according to a first embodiment;
- Figure 1B is an enlarged view of a detail of Figure 1A;
- Figure 2 is a top view of the device of Figure 2A;
- Figure 3 is a partially sectioned lateral view of an antitheft key suitable for transmitting a rotation to the device;
- Figure 4A is a partially sectioned lateral view of a antitheft nut according to a first embodiment;
- Figure 4B is an enlarged view of a detail of Figure 4A;
- Figure 5A is a partially sectioned lateral view of a antitheft bolt according to a second embodiment;
- Figure 5B is an enlarged view of a detail of Figure 5A;
- Figure 6A is a partially sectioned lateral view of a antitheft nut according to a second embodiment;
- Figure 6B is an enlarged view of a detail of Figure 6A.

### Description of a Preferred Embodiment

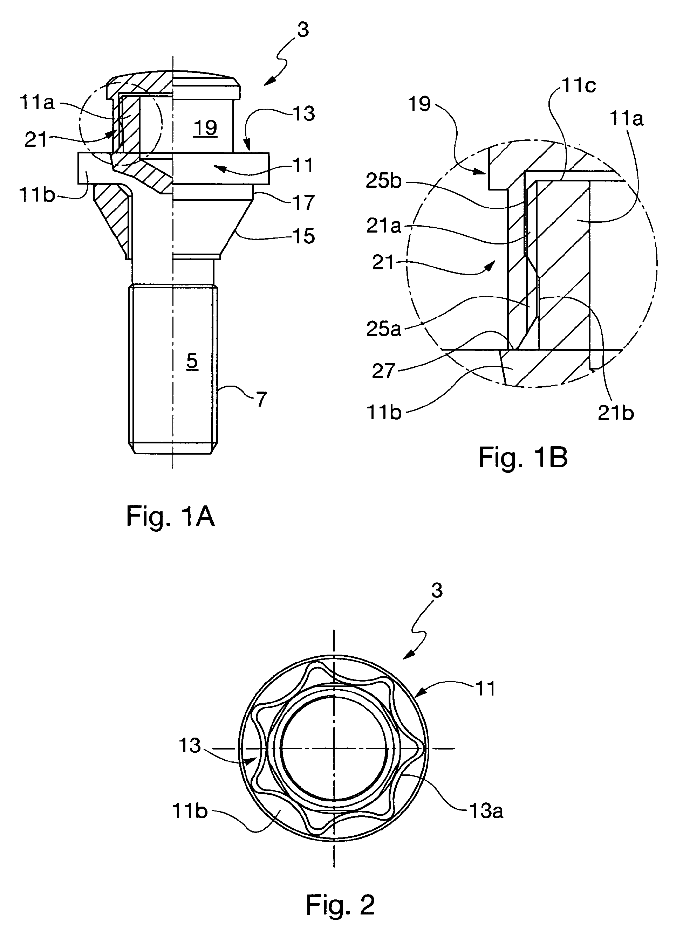

With reference to Figures 1A, 1B, 2 and 3, an antitheft locking device 3 is shown according to a first embodiment of the invention which is made as an antitheft nut and shaped in such a manner to be rotated with difficulty by using a conventional tool.

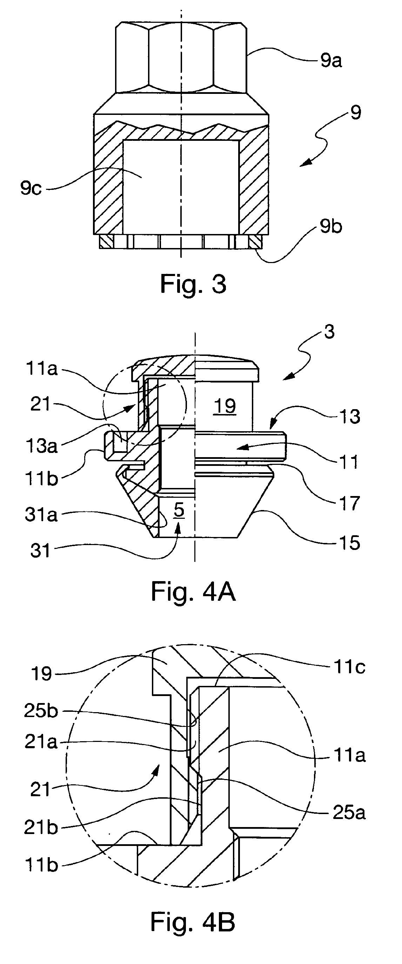

In the example shown, the antitheft device 3 comprises a stem 5 in which an externally threaded end 7 is defined, and a head 11 provided with engagement means 13 for a complementary key 9 (Figure 3) by means of which it is possible to rotate said device 3. According to the prior art, said key 9 comprises a hexagonal axial projection 9a which can be engaged by a fixed key.

The threaded end 7 of the stem 5 is suitable for engaging a threaded hole, for instance of a motor vehicle wheel hub, in order to lock a corresponding wheel rim. For this purpose, the stem 5 is provided with a preferably frusto-conical circumferential abutment portion 15 which extends around the stem 5 at a transition zone 17 between said stem 5 and said head 11.

According to this embodiment, the head 11 comprises a first cylindrical portion 11a which is in opposed position with respect to said stem 5, which extends axially and is joint with the stem 5 of the device 3, and a second portion 11b which radially extends around said first portion 11a.

A bushing 19, which in this embodiment is made as a blank one, is further provided for being freely rotatable around the portion 11a of the head 11, in order to prevent the rotation of said portion 11a and thus of the threaded stem 5 by means of a tool different from the corresponding key 9.

On said second portion 11b, which defines a corresponding radial abutment flange for the bushing 19, are advantageously defined said engagement means 13 for the complementary key 9 by means of which is possible to rotate said device 3. Said engagement means 13 are made, for example, as one or more seats or grooves 13a able for receiving complementary projections 9b provided in the corresponding antitheft key head 9.

Moreover, the first cylindrical portion 11a, around which said second flange portion 11b of the head 11 radially extends and which is provided with a bushing 19 rotatable in an idle manner, defines a corresponding axial guiding portion for a corresponding axial cavity 9c provided in the key 9.

According to the invention and as it can be seen more clearly in Figure 1B, the portion 11a comprises stopper means 21 for the bushing 19, which comprise a threaded portion 21a axially extending from a free end or base 11c (upper end in Figure 1B) of the portion 11a along a portion of the lateral cylindrical outer surface. A recessed portion or annular seat 21b is further defined on the lateral outer surface of the portion 11a, is preferably made without threading and axially extends from the portion 21a up to the second abutment portion 11b.

In an analogous manner, further according to the invention, the bushing 19 comprises a threaded portion 25a which axially extends from the free end 27 (lower end in Figure 4B) of the bushing 19 along a part of the cylindrical inner surface. Correspondingly, a recessed portion 25b is defined in the lateral inner surface of the bushing 19, is preferably made without threading and axially extends from the portion 25a along the remaining lateral inner surface of the bushing 19.

According to the invention, said threaded portions 21a, 25a permit the bushing 19 to be screwed onto the head 11 when assembling the device.

Further according to the invention, the radial length of the recessed portion or annular seat 21b is slightly shorter (e.g. some tenths of a millimetre) than the axial length of the threaded portion 25a provided inside the bushing 19 and/or the axial length of the recessed portion or seat 25b is slightly shorter than the axial length of the threaded portion 21a. Advantageously, due to this coupling, when the bushing 19 has been tightly screwed, the last part of the threading 21a and/or 25a (typically about half a threading rotation) is deformed and consequently it is impossible to remove the bushing 19 once the threaded portion 25a is arranged inside the seat 21b and, analogously, once the threaded portion 21a is arranged inside the seat 25b.

With reference now to Figure 4A and 4B, a second embodiment of the invention is shown, wherein the antitheft device 3 is made as an antitheft nut.

As a matter of fact, although the device 3 according to the invention have been hitherto described with reference to a bolt, it is however possible to manufacture the device as a nut, thus providing the stem 5 without an externally threaded portion, but with an axial hole 31 having a threaded portion 31a to be screwed onto a stem of a threaded stud provided e.g. in the motor vehicle hub.

Advantageously, according to this embodiment, it will be possible to make the hole 31 either as a blank-bore or a through-bore.

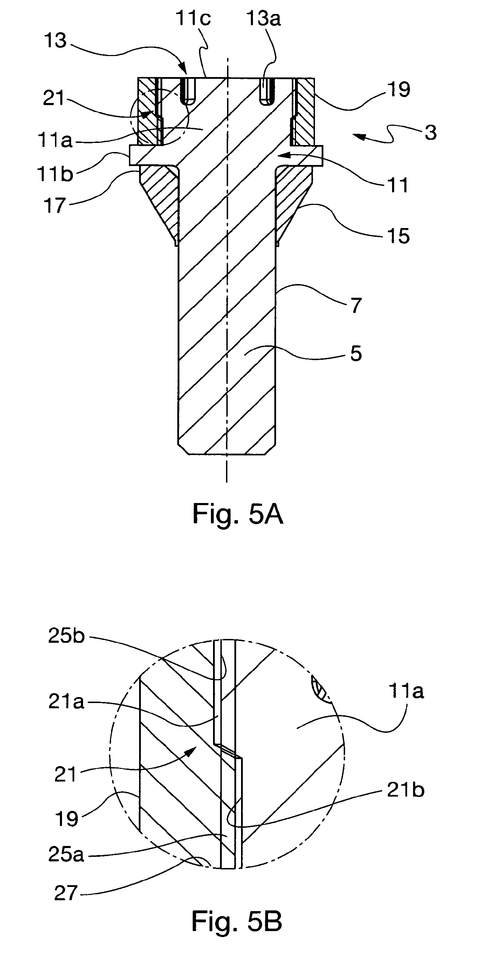

Referring to Figure 5A and 5B an antitheft device is shown, which is made as a bolt wherein the engagement means 13 are however defined in the base 11c of the head 11.

According to this embodiment, the bushing 19 is opened at both ends in order to allow the base 11c to be accessible when the device has to be rotated by the complementary key.

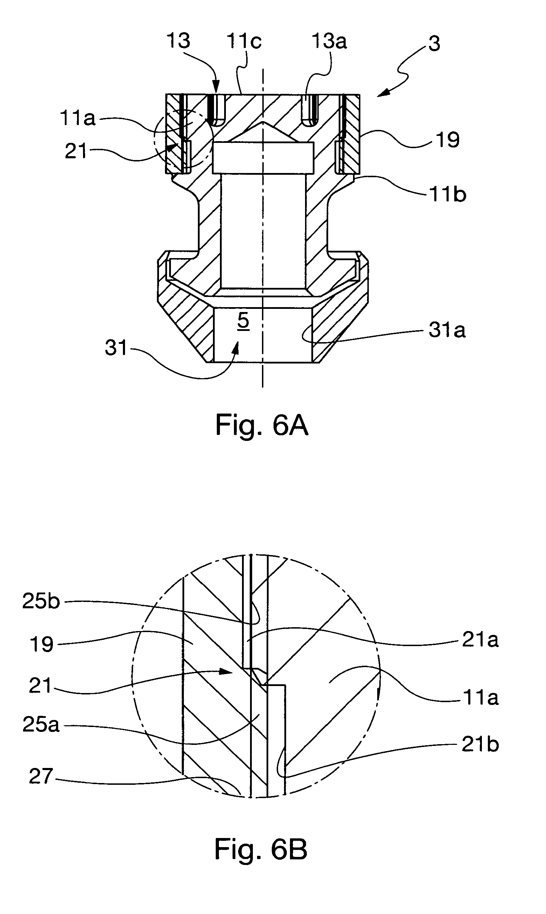

Referring to Figures 6A and 6B an antitheft device is shown, which is made as a nut wherein the engagement means 13 are defined in the base 11c of the head 11.

Also in this case, the bushing 19 is therefore opened at both ends in order to allow the base 11c to be accessible when the device has to be rotated by the complementary key.

Further according to the invention, the bushing 19 can advantageously be provided with one or more flat surfaces in order to make its rotation easier when it is assembled by screwing.

## Claims

1. Antitheft locking device (3), in particular for fixing a wheel to a motor vehicle hub, made as a nut or bolt, comprising a head (11) provided with a guiding portion (11a) for a complementary key (9) by means of which it is possible to rotate said device, and with engagement means (13) for said complementary key (9), and a bushing (19) freely rotatably associated around said guiding portion (11a) of the head (11) to prevent said guiding portion (11a) from being rotated with a tool different from the corresponding key (9), **characterized in that** said head (11) comprises a threaded portion (21a)
and an abutment portion (11b) for said bushing (19) such that, when screwing said bushing (19) onto said head (11) up to said abutment portion (11b), a deformation of said threaded portion (21a) is caused and thereby said bushing (19) is prevented from being unscrewed and axially withdrawn from said head (11).

2. Device according to claim 1, wherein said guiding portion (11a) comprises a threaded portion (21a) axially extending from the free end (11c) along a portion of the lateral cylindrical outer surface of the guiding portion (11a), a recessed portion or annular seat (21b) being defined on the lateral outer surface of the guiding portion (11a) and axially extending starting from said threaded portion (21a) up to an abutment portion (11b) for said rotatable bushing (19).

3. Device according to claim 2, wherein said bushing (19) comprises a threaded portion (25a) axially extending from the free end (27) along a portion of the cylindrical inner surface of the bushing (19), a recessed portion (25b) being defined on the lateral inner surface of the bushing (19) and axially extending from the threaded portion (25a) along the remaining lateral inner surface of the bushing (19).

4. Device according to claim 3, wherein said threaded portions (21a,25a) are able to allow the bushing (19) to be screwed onto the head (11) of the device when assembling of the device.

5. Device according to claim 4, wherein the recessed portion or annular seat (21b), provided on the lateral outer surface of the guiding portion (11a) of the head (11), axially extends for a length slightly shorter than the axial length of the threaded portion (25a) provided inside the bushing (19) and/or the recessed portion or seat (25b) provided on the inner surface of the bushing (19) axially extends for a length slightly shorter than the axial length of the threaded portion (21a) provided on the outer surface of the guiding portion (11a) of the head (11), whereby when the bushing (19) is tightly screwed the last part of the threading (21a, 25a) is deformed and the bushing (19) can no longer be removed.

6. method for the production of an antitheft locking device (3), in particular for fixing a wheel to a motor vehicle hub, made in form of nut or bolt, comprising a head (11) provided with a guiding portion (11a) for a complementary key (9) by means of which it is possible to rotate said device, and with engagement means (13) for said complementary key (9), and an associated bushing (19) freely rotatable around said guiding portion (11a) of the head (11) in order to prevent said guiding portion (11a) from being rotated by means of a tool different from the corresponding key (9), **characterized in that** it comprises a step of screwing the bushing (19) onto the head (11) up to an abutment portion (11b) for said rotatable bushing (19) so as to cause the deformation of the corresponding threading thereby preventing the bushing from being unscrewed.

## Patentansprüche

1. Diebstahlsicherungsverschlussvorrichtung (3), insbesondere zur Befestigung eines Rades an der Nabe eines Kraftfahrzeugs, die als eine Mutter oder ein Bolzen ausgelegt ist, umfassend einen Kopf (11), der mit einem Führungsteil (11a) für einen komplementären Schlüssel (9) ausgestattet ist, mittels welchem die genannte Vorrichtung gedreht werden kann, und mit Eingriffsmitteln (13) für den genannten komplementären Schlüssel (9), und einer Buchse (19), die um den genannten Führungsteil (11a) des Kopfes (11) herum frei drehbar gelagert ist, um zu verhindern, dass das genante Führungsteil (11a) durch ein vom entsprechenden Schlüssel (9) unterschiedliches Werkzeug gedreht wird, **dadurch gekennzeichnet, dass** der genannte Kopf (11) einen mit einem Gewinde versehenen Teil (21 a) und einen Anlageteil (11 b) für die genannte Buchse (19) so umfasst, dass beim Schrauben der genannten Buchse (19) auf den genannten Kopf (11) bis zum genannten Anlageteil (11b) eine Verformung des genannten mit einem Gewinde versehenen Teils (21 a) verursacht wird und **dadurch** das Abschrauben und das axiale Herausziehen der genannten Buchse (19) vom genannten Kopf (11) vermieden werden.

2. Vorrichtung nach Anspruch 1, wobei der genannte Führungsteil (11a) einen mit einem Gewinde versehenen Teil (21 a), der sich axial vom freien Ende (11 c) entlang eines Teils der seitlichen zylinderförmigen äusseren Fläche des Führungsteils (11a) erstreckt, und eine Ausnehmung oder einen ringförmigen Sitz (21 b) aufweist, der an der seitlichen äusseren Fläche des Führungsteils (11a) definiert ist und sich ausgehend vom genannten mit einem Gewinde versehenen Teil (21a) bis zu einem Anlageteil (11b) für die genannte drehbare Buchse (19) axial erstreckt.

3. Vorrichtung nach Anspruch 2, wobei die genannte Buchse (19) einen mit einem Gewinde versehenen Teil (25a), der sich vom freien Ende (27) entlang eines Teils der zylinderförmigen inneren Fläche der Buchse (19) axial erstreckt, und eine Ausnehmung (25b) aufweist, die an der seitlichen inneren Fläche der Buchse (19) definiert ist und sich vom mit einem Gewinde versehenen Teil (25a) entlang der verbleibenden seitlichen inneren Fläche der Buchse (19) axial erstreckt.

4. Vorrichtung nach Anspruch 3, wobei die genannten mit einem Gewinde versehenen Teile (21 a, 25a) das Schrauben der Buchse (19) auf den Kopf (11) der Vorrichtung bei der Montage der genannten Vorrichtung ermöglichen.

5. Vorrichtung nach Anspruch 4, wobei die Ausnehmung oder der ringförmige Sitz (21 b), der an der seitlichen äusseren Fläche des Führungsteils (11a) des Kopfs (11) vorgesehen ist, sich über eine Länge axial erstreckt, die leicht kürzer als die Axiallänge des mit einem Gewinde versehenen Teils (25a) ist, der innerhalb der Buchse (19) angeordnet ist, und/oder die Ausnehmung oder der Sitz (25b), der an der inneren Fläche der Buchse (19) angeordnet ist, sich über eine Länge axial erstreckt, die leicht kürzer als die Axiallänge des mit einem Gewinde versehenen Teils (21 a) ist, der an der äusseren Fläche des Führungsteils (11a) des Kopfs (11) vorgesehen ist, wobei, wenn die Buchse (19) festgeschraubt ist, der letzte Teil des Gewindes (21 a, 25a) verformt ist und die Buchse (19) nicht mehr entfernt werden kann.

6. Verfahren zur Herstellung einer Diebstahlsicherungsverschlussvorrichtung (3), insbesondere zur Befestigung eines Rades an der Nabe eines Kraftfahrzeugs, in der Form einer Mutter oder eines Bolzens, umfassend einen Kopf (11), der mit einem Führungsteil (11a) für einen komplementären Schlüssel (9) ausgestattet ist, mittels welchem die genannte Vorrichtung gedreht werden kann, und mit Eingriffsmitteln (13) für den genannten komplementären Schlüssel (9), und einer zugeordneten Buchse (19), die um den genannten Führungsteil (11a) des Kopfes (11) herum frei drehbar ist, um zu verhindern, dass das genante Führungsteil (11a) durch ein vom entsprechenden Schlüssel (9) unterschiedliches Werkzeug gedreht wird, **dadurch gekennzeichnet, dass** dieses Verfahren einen Schritt des Anschraubens der Buchse (19) auf den Kopf (11) bis zu einem Anlageteil (11 b) für die genannte drehbare Buchse (19) aufweist, um die Verformung des betroffenen Gewindes zu bewerkstelligen, was das Abschrauben der Buchse verhindert.

## Revendications

1. Dispositif de verrouillage antivol (3), en particulier pour fixer une roue à un moyeu de véhicule à moteur, conçu sous la forme d'un écrou ou d'une vis, comprenant une tête (11) pourvue d'une partie de guidage (11a) pour une clé complémentaire (9), à l'aide de laquelle il est possible de faire tourner ledit dispositif, et de moyens de prise (13) pour ladite clé complémentaire (9), et d'une douille (19) associée de façon à pouvoir tourner librement autour de ladite partie de guidage (11a) de la tête (11) afin d'empêcher que ladite partie de guidage (11a) ne puisse être tournée à l'aide d'un outil différent de la clé (9) correspondante, **caractérisé en ce que** ladite tête (11) comprend une partie filetée (21a) et une partie d'appui (11b) pour ladite douille (19) de sorte que, lorsque ladite douille (19) est vissée sur ladite tête (11) jusqu'à ladite partie d'appui (11b), une déformation de ladite partie filetée (21a) se produit, empêchant ainsi que ladite douille (19) ne puisse être dévissée et retirée axialement de ladite tête (11).

2. Dispositif selon la revendication 1, dans lequel ladite partie de guidage (11a) comprend une partie filetée (21a) s'étendant axialement depuis une extrémité libre (11c) le long d'une partie de la surface externe cylindrique latérale de la partie de guidage (11a), une partie en retrait ou un siège annulaire (21b) étant défini sur la surface externe latérale de la partie de guidage (11a) et s'étendant axialement depuis ladite partie filetée (21a) jusqu'à la partie d'appui (11b) pour ladite douille rotative (19).

3. Dispositif selon la revendication 2, dans lequel ladite douille (19) comprend une partie filetée (25a) s'étendant axialement depuis l'extrémité libre (27) le long d'une partie de la surface interne cylindrique de la douille (19), une partie en retrait (25b) étant définie sur la surface interne latérale de la douille (19) et s'étendant axialement depuis la partie filetée (25a) le long de la surface interne latérale restante de la douille (19).

4. Dispositif selon la revendication 3, dans lequel lesdites parties filetées (21a, 25a) sont capables de permettre à la douille (19) d'être vissée sur la tête (11) du dispositif lors de l'assemblage du dispositif.

5. Dispositif selon la revendication 4, dans lequel la partie en retrait ou le siège annulaire (21b), formé sur la surface externe latérale de la partie de guidage (11a) de la tête (11), s'étend axialement sur une longueur légèrement plus courte que la longueur axiale de la partie filetée (25a), formée à l'intérieur de la douille (19), et/ou la partie en retrait ou le siège (25b) formé sur la surface interne de la douille (19) s'étend axialement sur une longueur légèrement plus courte que la longueur axiale de la partie filetée (21a) formée sur la surface externe de la partie de guidage (11a) de la tête (11), si bien que, lorsque la douille (19) est vissée à fond, la dernière partie du filetage (21a, 25a) se déforme et la douille (19) ne peut plus être retirée.

6. Procédé de fabrication d'un dispositif de verrouillage antivol (3), en particulier pour fixer une roue à un moyeu de véhicule à moteur, conçu sous la forme d'un écrou ou d'une vis, comprenant une tête (11) pourvue d'une partie de guidage (11a) pour une clé complémentaire (9), à l'aide de laquelle il est possible de faire tourner ledit dispositif, et de moyens de prise (13) pour ladite clé complémentaire (9), et d'une douille (19) associée, pouvant tourner librement autour de ladite partie de guidage (11a) de la tête (11) afin d'empêcher que ladite partie de guidage (11a) ne puisse être tournée à l'aide d'un outil différent de la clé (9) correspondante, **caractérisé en ce qu'**il comprend une étape consistant à visser la douille (19) sur la tête (11) jusqu'à une partie d'appui (11b) pour ladite douille rotative (19) afin de provoquer la déformation du filetage correspondant, empêchant ainsi que la douille ne puisse être dévissée.
